Europäisches Patentamt

European Patent Office

Office européen des brevets

(19)

(11) Veröffentlichungsnummer: **0 382 912**

**A1**

(12) # EUROPÄISCHE PATENTANMELDUNG

(21) Anmeldenummer: **89122640.9**

(22) Anmeldetag: **08.12.89**

(51) Int. Cl.⁵: **B60B 21/12, B60C 15/028**

(30) Priorität: **13.01.89 DE 8900337 U**

(43) Veröffentlichungstag der Anmeldung:
**22.08.90 Patentblatt 90/34**

(84) Benannte Vertragsstaaten:
**AT BE CH FR GB IT LI LU NL SE**

(71) Anmelder: **VORWERK & SOHN GmbH & Co. KG**
**Obere Lichtenplatzer Strasse 336**
**D-5600 Wuppertal 2(DE)**

(72) Erfinder: **Piepenbrink, Ulrich**
**Ernst-Adolf-Strasse 43**
**D-5830 Schwelm(DE)**

(74) Vertreter: **Honke, Manfred, Dr. et al**
**Patentanwälte Andrejewski, Honke & Partner**
**Theaterplatz 3 Postfach 10 02 54**
**D-4300 Essen 1(DE)**

(54) **Fahrzeugrad.**

(57) Es handelt sich um ein Fahrzeugrad mit zumindest einer Felge (1), einem schlauchlosen Luftreifen (2) und einem Spreizring (3) mit Drahtbündelarmierung zur Sicherung der Reifenfüße (4) auf den Felgenschultern (5). Der Spreizring (3) besteht aus einem auf Umfangslänge abgelängten Kammprofilstrang mit in seiner äußeren Umfangsflächen umlaufenden Ringnuten (11). In die Ringnuten (11) sind Drahtbündelringe (12) oder Kabelkerne eingesetzt. Der Spreizring (3) zeichnet sich durch eine gewichtssparende und kostengünstige Fertigung aus und übt dennoch ausreichende Spreizwirkung selbst bei geringsten Luftdrücken aus.

Fig. 1

EP 0 382 912 A1

# Fahrzeugrad

Die Erfindung betrifft ein Fahrzeugrad mit zumindest einer Felge, einem schlauchlosen Luftreifen und einem Spreizring mit Drahtbündelarmierung zur Sicherung der Reifenfüße auf den Felgenschultern.

Bei derartigen Fahrzeugrädern hat der Spreizring dafür zu sorgen, daß der Luftreifen selbst bei niedrigen Luftdrücken einwandfrei auf der Felge gehalten wird, also nicht von der Felge abspringen kann. Das gelingt durch die Spreizwirkung, mit welcher die Reifenfüße auf den Felgenschultern gegen das Felgenhorn und - bei regelmäßig geteilten Felgen - gegen den Seitenring gedrückt werden. Der Spreizring übernimmt folglich bei geringen Luftdrücken Luftdruckfunktion. - Die bekannten Spreizringe bestehen im allgemeinen aus einem in einer Form hergestellten Hartgummiring, wobei die Drahtbündelarmierung in den Hartgummiring eingebettet, also allseitig von Hartgummi umgeben ist. Die Fertigung solcher Spreizfüße ist schwierig, weil das Einbetten der Drahtbündelarmierung in einwandfreier Verteilung erfolgen muß. Das verlangt den Einsatz teurer Formen, so daß die Fertigung auch kostenaufwendig ist. Hinzu kommt, daß die bekannten Spreizringe wegen ihres Vollquerschnittes ein verhältnismäßig hohes Gewicht aufweisen. - Hier will die Erfindung Abhilfe schaffen.

Der Erfindung liegt die Aufgabe zugrunde, ein Fahrzeugrad der eingangs beschriebenen Art zu schaffen, bei dem sich der Spreizring durch eine verhältnismäßig einfache, gewichtssparende und kostengünstige Fertigung auszeichnet und dennoch ausreichende Spreizwirkung selbst bei geringsten Luftdrücken ausübt.

Diese Aufgabe löst die Erfindung bei einem gattungsgemäßen Fahrzeugrad dadurch, daß der Spreizring aus einem auf - durch die Felge bzw. den Reifenfüßen - vorgegebene Umfangslänge abgelängten Kammprofilstrang mit in seiner äußeren Umfangsfläche umlaufenden Ringnuten besteht und in die Ringnuten Drahtbündelringe oder Kabelkerne eingesetzt sind. - Diese Maßnahmen der Erfindung haben zunächst einmal zur Folge, daß der Spreizring aus einem extrudierten Kammprofil hergestellt werden kann, und zwar mit Längsnuten, die bei Bildung des Spreizringes aus einem entsprechend abgelängten Kammprofilstrang zu Ringnuten werden und im Zuge der Montage das Einsetzen von Drahtbündelringen als Drahtbündelarmierung ermöglichen. Folglich kann bei der Herstellung des erfindungsgemäßen Spreizringes auf sonst teure Formen verzichtet werden, wird insbesondere stets eine wohldefinierte und kontrollierbare Anordnung der Drahtbündelarmierung erreicht, wobei auf eine schwierige Einbettung in den Spreizring verzichtet wird. Die Längs- bzw. Ringnuten gewährleisten darüber hinaus eine Gewichtsersparnis. In diesem Zusammenhang muß überraschen, daß selbst bei reduziertem Spreizringquerschnitt einwandfreie Spreizwirkung erreicht wird, die auch bei geringsten Luftdrücken ausreicht, um die Reifenfüße auf den Felgenschultern zu sichern. Das gilt insbesondere dann, wenn nach bevorzugter Ausführungsform der Erfindung die Drahtbündelringe mit vorgegebener Vorspannung in die Ringnuten eingesetzt werden. - Im ganzen wird nach Lehre der Erfindung eine verhältnismäßig einfache, gewichtssparende und kostengünstige Spreizringherstellung erreicht.

Weitere erfindungswesentliche Merkmale sind im folgenden aufgeführt. So kann der Kammprofilstrang als extrudierter Kunststoffstrang oder gegossener Hartgummistrang ausgebildet sein. Das ist in fertigungstechnischer Hinsicht besonders günstig. Zweckmäßigerweise ist der Kammprofilstrang mit rechtwinkligem Profilschnitt auf z. B. Gehrung geschnitten vulkanisiert. Es erfolgt anschließend die Konfektionierung mit den Drahtbündelringen zu dem Spreizring. Die Drahtbündelringe bestehen vorzugsweise aus nebeneinander und/oder übereinander liegenden Drähten, z. B. Reifeneinlegedrähten, mit einer vulkanisierten Umhüllung. Regelmäßig sind acht nebeneinander liegende Drähte verwirklicht, die gemeinsam durch einen Extruderspritzkopf geführt und mit unvulkanisierter Mischung umspritzt werden, so daß sich ein rechteckiges Drahtbündel ergibt. Dieses Drahtbündel wird frei - also ohne Form - unter Dampfdruck in einem Kessel vulkanisiert. Die Anzahl der Wickellagen der einzelnen Drähte und die Geometrie der umspritzten Drahtbündel kann variiert werden. Der Kammprofilring weist zumindest eine - regelmäßig zwei sich gegenüberliegende - Radialbohrungen auf, welche im Zuge der Montage dem Ventil zugeordnet werden und die Versorgung des schlauchlosen Luftreifens mit Druckluft ermöglichen. - Vorzugsweise sind mehrere Ringnuten nebeneinander und ggf. auf verschiedenen Durchmessern angeordnet. Erfindungsgemäß sind die außenliegenden Ringnuten auf größeren Durchmessern als die innenliegenden Ringnuten angeordnet. Dadurch wird die Spreizwirkung optimiert.

Im folgenden wird die Erfindung anhand einer lediglich ein Ausführungsbeispiel darstellenden Zeichnung näher erläutert; es zeigen:

Fig. 1 teilweise ein erfindungsgemäßes Fahrzeugrad im Radialschnitt, und

Fig. 2 einen Spreizring bildenden Kammprofilstrang im Querschnitt.

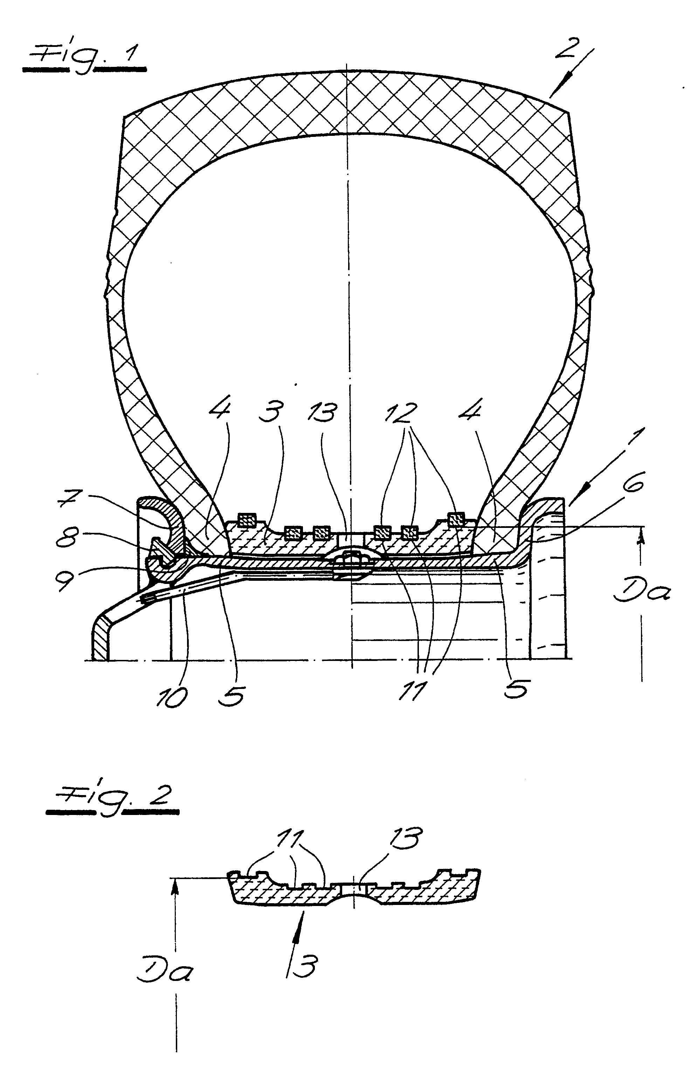

In den Figuren ist ein Fahrzeugrad mit zumindest einer Felge 1, einem schlauchlosen Luftreifen 2 und einem im Felgenbett umlaufenden Spreizring 3 mit Drahtbündelarmierung zur Sicherung der Reifenfüße 4 auf den Felgenschultern 5 bzw. gegen das Felgenhorn 6 und einem Seitenring 7 der geteilten Felge dargestellt. Dem Seitenring 7 sind ein Verschlußring 8 und ein Dichtungsring 9 zugeordnet. In das Felgenbett ist ein Ventil 10 eingesetzt. Der Spreizring besteht aus einem auf durch die Felge bzw. den Reifenfüßen vorgegebene Umfangslänge abgelängten Kammprofilstrang 3 mit in seiner äußeren Umfangsfläche umlaufenden Ringnuten 11. In die Ringnuten 11 sind Drahtbündelringe 12 eingesetzt. Der Kammprofilstrang 3 ist als extrudierter Kunststoffstrang ausgebildet. Ferner ist der Kammprofilstrang 3 mit rechtwinkligem Profilschnitt auf Gehrung geschnitten und vulkanisiert. Der Kammprofilring weist zumindest eine Radialbohrung 13 auf, welche dem Ventil 10 zugeordnet wird und Lufteintritt in den Luftreifen 2 ermöglicht. Die Drahtbündelringe 12 sind mit vorgegebener Vorspannung in die Ringnuten 11 eingesetzt. Es sind mehrere Ringnuten 11 nebeneinander und auf verschiedenen Durchmessern angeordnet. Die außenliegenden Ringnuten 11 sind auf größeren Durchmessern Da als die innenliegenden Ringnuten angeordnet.

## Ansprüche

1. Fahrzeugrad mit zumindest einer Felge, einem schlauchlosen Luftreifen und einem Spreizring mit Drahtbündelarmierung zur Sicherung der Reifenfüße auf den Felgenschultern, **dadurch gekennzeichnet**, daß der Spreizring (3) aus einem auf Umfangslänge abgelängten Kammprofilstrang mit in seiner äußeren Umfangsfläche umlaufenden Ringnuten (11) besteht und in die Ringnuten (11) Drahtbündelringe (12) oder Kabelkerne eingesetzt sind.

2. Fahrzeugrad nach Anspruch 1, dadurch gekennzeichnet, daß der Kammprofilstrang (3) als gegossener Hartgummistrang oder extrudierter Kunststoffstrang ausgebildet ist.

3. Fahrzeugrad nach Anspruch 1 oder 2, dadurch gekennzeichnet, daß der Kammprofilstrang (3) mit rechtwinkligem Profilschnitt vulkanisiert ist.

4. Fahrzeugrad nach einem der Ansprüche 1 bis 3, dadurch gekennzeichnet, daß der Kammprofilring zumindest eine Radialbohrung (13) aufweist.

5. Fahrzeugrad nach einem der Ansprüche 1 bis 4, dadurch gekennzeichnet, daß die Drahtbündelringe (12) aus nebeneinander und/oder übereinander liegenden Drähten, z. B. Reifeneinlegedrähten, mit einer vulkanisierten Umhüllung bestehen.

6. Fahrzeugrad nach einem der Ansprüche 1 bis 5, dadurch gekennzeichnet, daß die Drahtbündelringe (12) mit vorgegebener Vorspannung in die Ringnuten (11) eingesetzt sind.

7. Fahrzeugrad nach einem der Ansprüche 1 bis 6, dadurch gekennzeichnet, daß mehrere Ringnuten (11) nebeneinander und ggf. auf verschiedenen Durchmessern angeordnet sind.

8. Fahrzeugrad nach einem der Ansprüche 1 bis 7, dadurch gekennzeichnet, daß die außenliegenden Ringnuten (11) auf größeren Durchmessern (Da) als die innenliegenden Ringnuten angeordnet sind.

EP 0 382 912 A1

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 662 419 (WINFIELD) <br> * Spalte 3, Zeilen 15-30; Figur 3 * <br> --- | 1,2,4 | B 60 B 21/12 <br> B 60 C 15/028 |
| A | US-A-4 173 243 (WILDE) <br> * Spalte 2, Zeilen 17-30,41-43; Figur 1 * <br> --- | 1,3 | |
| A | FR-A-2 259 707 (KRONPRINZ) <br> * Seite 4, Zeilen 2-12; Figur 1 * <br> --- | 1,6 | |
| A | FR-A-2 189 222 (RUBERY, OWEN) <br> * Seite 3, Zeilen 2-10; Figur 2 * <br> --- | 1,2,6 | |
| A | FR-A-2 331 456 (GOODYEAR) <br> * Seite 3, Zeilen 18-37; Seite 4, Zeilen 1-37; Figur 4 * <br> --- | 1,2 | |
| A | GB-A- 554 961 (FIRESTONE) <br> * Seite 4, Zeilen 64-91; Figuren 9,10 * <br> ----- | 1 | |

RECHERCHIERTE SACHGEBIETE (Int. Cl.5)

B 60 B
B 60 C

Der vorliegende Recherchenbericht wurde für alle Patentansprüche erstellt

| Recherchenort | Abschlußdatum der Recherche | Prüfer |
|---|---|---|
| DEN HAAG | 20-04-1990 | AYITER I. |